# EUROPEAN PATENT APPLICATION

(11) **EP 0 739 121 A2**
(43) Date of publication of application: **23.10.1996**
(21) Application number: 96302776.8
(22) Date of filing: 19.04.1996
(51) Int. Cl.: H04M 1/27

(54) **Voice activated telephone**

(30) Priority: 19.04.1995 US 423487
(71) Applicant: TEXAS INSTRUMENTS INCORPORATED, Dallas Texas 75265 (US)
(72) Inventor: Pawate, Basavaraj, Tsukuba, Ibaraki (JP); Rajasekaran, P.K., Richardson, TX 75082 (US)
(74) Representative: Legg, Cyrus James Grahame

(57) **Abstract**

A system and method for hands-free dialing of a telephone is described. This is particularly useful for mobile telephones. In accordance with one embodiment of the present invention, the system is taken off-hook upon the recognition of an activation word or phrase. The system then looks for a dialing phase and, if given, dials up the number recognized. If a dialing phrase is not recognized within a specific time interval, say one second, then the system goes on-hook again. Upon recognition of a dialing phrase, the system does not complete the dialing immediately but waits for a possible cancellation word or phrase. If no cancellation word or phrase is recognized, the system proceeds to make the call.

## Description

### TECHNICAL FIELD OF THE INVENTION

This invention relates to a phone unit with speech recognition.

### BACKGROUND OF THE INVENTION

It is particularly desirable today with telephones used in an automobile, truck, or other moving vehicle that some means be provided which will enable one to place calls and/or receive calls without taking their hands off the steering wheel of the vehicle. Many so-called "hands-free" cellular telephones are really not hands-free but require the user to first take the phone off the hook by some pushing means or other means and then dialing the number by hand before placing the phone down on a tray for communicating. This use of the hands while driving is undesirable and in fact is a risk to the driver and to the others on the road. It is highly desirable that a system be provided in which enables hands-free operation providing safety both for the driver and to others.

### SUMMARY OF THE INVENTION

In accordance with one preferred embodiment of the present invention, an improved method and system is achieved by taking a telephone off the hook in response to recognition of an activation word or phrase. In accordance with another embodiment of the present invention the method includes listening for a dialing phrase after a telephone is off-hook and placing a call if there is a dialing phrase after a waiting period for a cancellation word or phrase following the dialing phrase.

### DESCRIPTION OF THE DRAWINGS

Fig. 1 is a sketch of the system in accordance with one embodiment of the present invention;
Fig. 2 is a block diagram of the system of Fig. 1; and
Fig. 3 is a flowchart of the phone recognizer according to one embodiment of the present invention.

### DESCRIPTION OF ONE EMBODIMENT

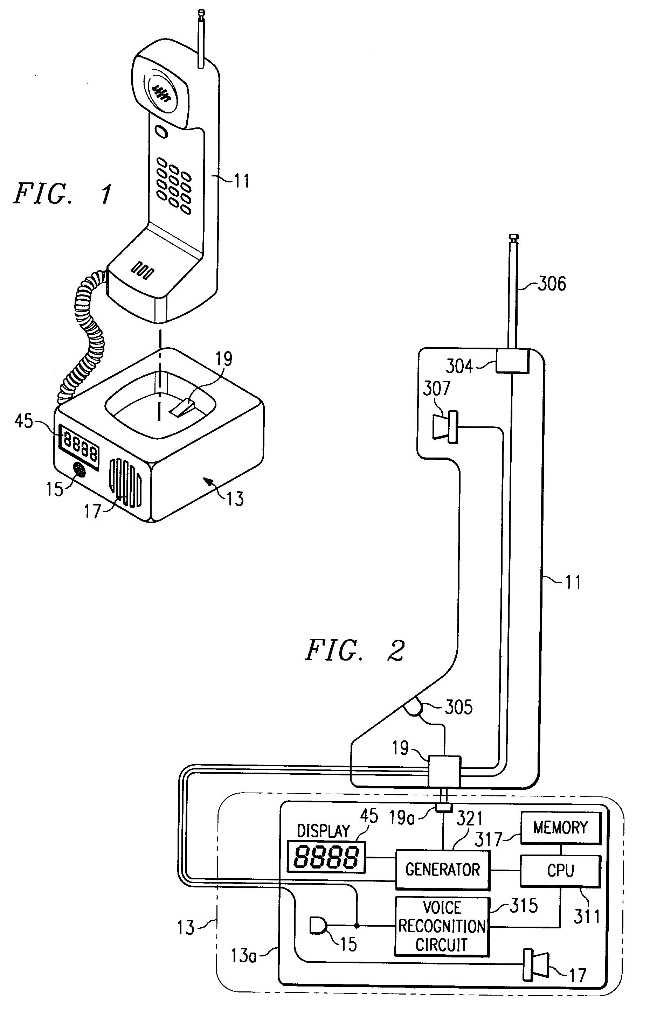

Referring to Fig. 1 there is illustrated one embodiment with a telephone handset 11 which can be placed in a cradle 13 mounted in a vehicle. The cradle 13 itself is coupled to a hands-free microphone 15 (located at an optimum point such as on a sunvisor or I-beam of an automobile) and speaker system 17 for use when the telephone handset 11 is in the cradle 13. When the telephone handset 11 is in the cradle 13, it depresses an on-hook switch 19 to put the system on-hook, deactivating the system.

Fig. 2 illustrates a system block diagram of the system of Fig. 1 wherein the hands-free microphone 15 and the hands-free speaker 17 are attached to the cradle 13 and there is an audio controller 13a which controls the audio of the telephone handset 11 and cradle system 13. There is a telephone handset 11 microphone 305 and a telephone handset 11 speaker 307. When the telephone handset 11 is in the cradle 13, for example, the hands-free microphone 15 and speaker 17 are activated by the switch 19. The switch 19 selectively couples the cradle 13 and handset 11 speakers 307 and 17 and microphones 305 and 15 to the transmitter-receiver 304 and antenna 306. The cradle 13 may include a display 45 for displaying telephone numbers. The audio controller 13a may include for example a CPU 311 which would include the stored program for operation of the program for the phone recognizer and the system would also have a voice recognition circuit (VRC) 315 which is coupled with the CPU 311 and to a memory 317 for storing the operating program for the CPU 311 to follow the program of the system. The VRC 315 may be like that shown and described in Fig. 4 of U.S. Patent No. 4, 961, 212 incorporated herein by reference. The speech recognition models may be stored in the memory 317 or in separate memory in VRC 315. The models stored would include a special model, for example for an activation word or phrase like "activate," and would also have stored therein dialing repertory models for "call home," "call office" or other special speaker dependent models like "call Bob" and also have speaker independent models for the digits zero through nine for the telephone numbers. These speech recognition models or templates may also be down loaded from a central database , not shown, to the local handset 11. This may be done after the activation word or phrase has been recognized. The central database may be provided by a service provider. The system may also include a generator 321 for generating a number to be recognized on the display screen 45 and/or for providing a sound to the speaker 17 or 307 as a sound to indicate recognition of "activation" or "call home," "call office" and "call a number." In the case of "calling office," "calling home," or "calling a number," the generator 321 may include a speech synthesizer to repeat the recognized words as "call home," "call office" or "call a number." The generator 321 also generates dial tones (tone dialer) and plays them into the microphone 305 of the handset and through speaker 17. The switch 19 is switched into the off-hook state when an activation word is recognized by a signal from generator 321. The switch 19 may be operated in response to the signal such that for example a solenoid activated plunger 19a is no longer pushing against a push button on switch 19. When the call is complete the generator 321 can again de-energize the solenoid and plunger is sprung back against the push button on the handset switch 19 to place the handset on-hook. The audio controller 13a, the voice recognition circuit 315, the CPU 311, the generator 321 the memory 317, etc. may all be in the handset 11 with the off-hook dependent on an activation word or phrase. The switch 19 is then operated directly by the signal. In another scenario, the voice recognition could be done at the telephone switching office that contains the voice recognition circuit 315, the CPU 311 and the memory 317.

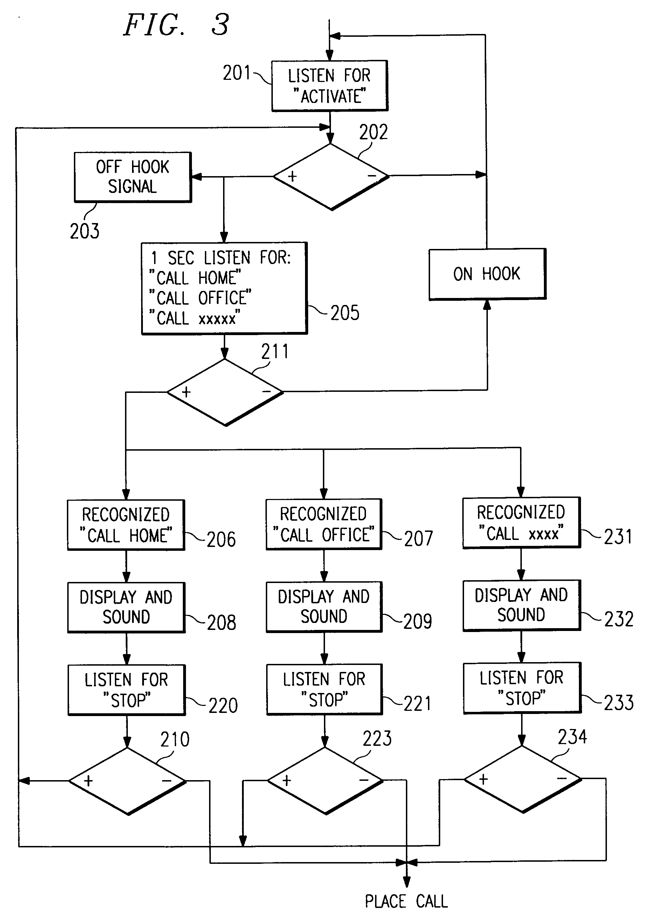

Referring to Fig. 3 there is illustrated a flowchart of the CPU processor 311 in the audio controller 13a for the operation system of Figs. 1 and 2. The voice recognition circuit 315 would first listen for the "activate" voice message, for example. Unless this activation word or phrase message was spoken, the telephone handset 11 would be turned off and the system would remain off-hook or on waiting for a message. The model stand-in memory 317 for "activate" could be, for example, a speaker independent model for the word "activate." Applicant's have used here the word "Activate" for the activation word, but it may preferably be a phrase such as "ACTIVATE CELLULAR PHONE" which phrase could be carefully chosen so as to be (a) spectrally rich like having many vowels, (b) as long as possible, but not too long for the user to say, and, (c) not commonly occurring in normal speech. In accordance with other embodiments of the present invention, other words could be used. It is also possible according to the present invention that the word "activate" or similar such word or phrase could also be a speaker dependent model. This is represented by the flowchart at step 201 of Fig. 3.

In the next step 202 if this is not detected the audio controller 13a continues to wait and listen for an activate word. If on the other hand the system does detect the activate voice message (+ or yes), then an off-hook signal is provided (Step 203) and generator 321 provides a signal notifying user of this through the speaker 17 in Fig. 2 that the system is off the hook. The audio controller 13a also provides a signal to the switch 19a to energize the switch 19 and enable the transmitter of transmitter-reviewer 304 of handset 11. According to the protocol in the present invention, a dialing phrase is then listened for (Step 205) which consists of a name or a number and must be provided within a specific period, say one second or so as determined by a timer in the CPU 311. For example, the system listens for either a repertory list word such as "home," which response has a number associated therewith, or "office," which response has a number associated therewith. The system could use a speaker independent anchor word such as "call" or "dial" before "home" or "office." This is then compared to the model of the speaker's voice which may be speaker dependent.

When the system recognizes "call home," for example, the number associated from that is addressed from memory and the system goes through the recognized "call home" step 206 and provides either a speech synthesized number or a sound (from generator 321) through speaker 17 and/or a number on display 45 (step 208) which indicates recognition and then proceeds to place the call. This call is placed provided there is no "stop" or cancellation phrase signal at step 220. The "stop" or cancellation phrase is represented by a positive or yes at step 210. The system listens for "stop" or cancellation phrase signal for a specific interval of time, such as one second.

Similarly, the system may call the office in response to the word "call office" (step 207) and provide the display and sound (step 209) to indicate calling office. The system listens for a "stop" signal at step 221 for a specific interval of time, say one second, and if there is no stop signal (Step 223) it places the call.

In addition to calling home or office, the recognition repertory list could call a name such as "United Airlines" and the number in the memory associated with United Airlines would be called if that was spoken in place of "home". The system could also call a number by "call 491-1724" from a list of numbers and could recognize that number. The model in that case may be a speaker independent model which would recognize the number (step 231) and provide a display of that number (step 232) and the system would listen for a cancellation signal such as "stop" (step 233) and if there is not a stop, go ahead and place the call. The call would be placed by a tone dialer in generator 321. The audio controller 13a would also send the tone through the speaker 17 to give an audio feedback to the user that the call was placed.

If there is no speech recognized after a specified interval after being taken off-hook, say one second, at step 205, as indicated by the negative or "no" of the flowchart at Step 211, the system would go "on-hook" at step 204 in other words deactivate the system. Thereby if the user has second thoughts about calling at step 205, the user only has to remain silent rather than positively cancelling. A provision for positive cancellation at step 220, 221 or 233 of a call could be by the cancellation phrase such as "stop" represented by the listen for "stop" step listed at the output of each display and sound step indicated in the flowchart. If "stop" is heard on time the system is put back (positive decision at blocks 210, 223 or 234) to the state where the system is then listening for a name from the repertory list or a new number.

The system at steps 220, 221, and 223 listens for a stop signal such as the speaker independent or speaker dependent word "stop" stored in the memory and if that occurs as indicated by + at steps 210, 223, and 234 the system does not go "on-hook" but goes to step 202 to listen for a call direction at step 205. The generator 321 provides a signal notifying user that the system is off the hook and ready to listen for a "dialing phrase". If the "stop" word is not recognized within a specific time interval after the dialing phrase is spoken and recognized, say one second, then the call is placed. After the call is placed the system remains off-hook until a dial tone or no speech for 20 seconds is heard by the recognizer and then the audio controller 13a deactivates the system and places switch 19 back in the listening mode with the handset 11 on-hook.

## Claims

1. A method for providing hands-free dialing of a telephone to make a call comprising the steps of:
providing a first database of speech recognition templates for an activation word or phrase for activating said telephone;
listening for said activation word or phrase from a speaker; and
taking said telephone off-hook upon receipt of said activation word or phrase.

2. The method of Claim 1 further including the step of providing an acknowledgment off-hook signal in response to receipt of said activation word or phrase to notify said speaker that said telephone is off-hook.

3. The method of Claim 2 including the further steps of:
providing a second database of speech recognition models for a dialing word or phrase and corresponding telephone numbers;
listening for said dialing word or phrase from said speaker in response to said taking step; and
if said dialing word or phrase is not recognized within a predetermined time period placing said telephone on-hook.

4. The method of Claim 3 including the further step of upon recognition of said dialing word or phrase displaying said dialing word or phrase.

5. The method of Claim 4, further including the step of upon recognition of said dialing word or phrase providing an audible sound of said dialing word or phrase.

6. The method of Claim 5, further including the step of upon recognition of one of said corresponding telephone numbers, displaying said one of said corresponding telephone numbers.

7. The method of Claim 6, further including the step of upon recognition of said one of said corresponding telephone numbers, providing an audible sound of said one of said corresponding telephone numbers.

8. The method of Claim 7, further including the steps of providing a third database of speech recognition templates for a cancellation word or phrase; upon recognition of said one of said corresponding telephone number and before said one of said corresponding telephone numbers is dialed listening for said cancellation word or phrase; and cancelling the call upon recognition of said cancellation word or phrase.

9. The method of Claim 8 further including the step of:
upon cancelling the call after said cancellation word or phrase has been recognized listening for said dialing word or phrase from said speaker.

10. The method of Claim 9 further including the step of generating an off-hook signal in response to cancelling the call.

11. The method of Claim 10 further including the step of placing the call if said cancellation word or phrase is not recognized.

12. The method of Claim 11 wherein said first database includes speaker independent speech recognition templates for said activation word or phrase and wherein said listening step includes the steps of:
downloading said speaker independent speech recognition templates from said first database to a local station in communication with said activation word or phrase received; and
comparing said activation word or phrase to that in said templates.

13. A hands free dialing system for dialing a telephone to make a call, comprising:
a database memory that stores first speech templates containing an activation word or phrase;
a telephone having an on/off-hook switch; and
a microphone controller including a comparator coupled to said database memory; said microphone controller and said on/off hook switch for taking said telephone off-hook in response to comparison of a received activation word or phrase to said first speech templates.

14. The system of Claim 13, wherein said database memory includes second speech templates containing dialing words or phrases; and
wherein said controller is further responsive to a recognized comparison of received dialing words or phrases to said second speech templates for dialing an associated telephone number.

15. The system of Claim 14 further including a speaker coupled to said controller and wherein said controller provides a first sound indication of said telephone being taken off-hook when said received activation word or phrase is recognized and provides a second sound indication of a dialed number when said received dialing words or phrases are recognized.

16. The system of Claim 15 further including a display coupled to said controller and wherein said controller is responsive to recognition of said dialing words or phrases to display said recognized dialing words or phrases and said associated telephone number.

17. The system of Claim 16, wherein said database memory includes third speech templates of cancellation words or phrases and wherein said controller cancels the call in response to a comparison of received cancellation words or phrases to said third speech templates.

18. The system of Claim 17, wherein said controller puts said system back to listen for a new dialing word or phrase in response to cancellation of the call.

19. The system of Claim 18, wherein said controller places said on/off-hook switch back on-hook if said dialing words or phrases are not recognized by a predetermined period of time after recognizing said activation word or phrase.

20. The system of Claim 19, wherein said controller proceeds to place the call, if said cancellation words or phrases are not recognized within a specific period of time after recognition of said dialing words or phrases.

21. The system of Claim 20 wherein said telephone is a mobile telephone.

22. A mobile telephone system which operates in accordance with any of Claims 1-12.
